(19) Europäisches Patentamt
European Patent Office
Office européen des brevets

(11) Veröffentlichungsnummer: **0 510 383 A2**

# (12) EUROPÄISCHE PATENTANMELDUNG

(21) Anmeldenummer: **92105395.5**

(22) Anmeldetag: **28.03.92**

(51) Int. Cl.$^5$: **C08L 71/12**, C08L 77/00

(30) Priorität: **23.04.91 DE 4113162**

(43) Veröffentlichungstag der Anmeldung:
**28.10.92 Patentblatt 92/44**

(84) Benannte Vertragsstaaten:
**BE DE FR GB NL**

(71) Anmelder: **BASF Aktiengesellschaft**
**Carl-Bosch-Strasse 38**
**W-6700 Ludwigshafen(DE)**

(72) Erfinder: **Muehlbach, Klaus, Dr.**
**Im Zaunruecken 20**
**W-6718 Gruenstadt(DE)**
Erfinder: **Pipper, Gunter**
**Schlangenthaler Weg 10**
**W-6702 Bad Duerkheim(DE)**
Erfinder: **Steiert, Peter, Dr.**
**Madenburgstrasse 10**
**W-6700 Ludwigshafen(DE)**

## (54) Hochschlagzähe Formmassen.

(57) Hochschlagzähe Formmassen, enthaltend als wesentliche Komponenten

A) 5 - 95 Gew.% eines teilaromatischen teilkristallinen Copolyamids, aufgebaut im wesentlichen entweder aus
- $A_1$) 3 - 18 Gew.% Einheiten, die sich von Terephthalsäure und Hexamethylendiamin ableiten,
- $A_2$) 0 - 97 Gew.% Einheiten, die sich von $\epsilon$-Caprolactam ableiten und
- $A_3$) 0 - 97 Gew.% Einheiten, die sich von Adipinsäure und Hexamethylendiamin ableiten,

oder aus
- $A_1$) 18,1 - 48 Gew.% Einheiten, die sich von Terephthalsäure und Hexamethylendiamin ableiten,
- $A_2$) 52 - 81,9 Gew.% Einheiten, die sich von $\epsilon$-Caprolactam ableiten und
- $A_3$) 0 - 29,9 Gew.% Einheiten, die sich von Adipinsäure und Hexamethylendiamin ableiten,

B) 3 - 85 Gew.% eines modifizierten Polyphenylenethers, der bis zu 40 Gew.%, bezogen auf B), durch ein vinylaromatisches Polymeres ersetzt sein kann,
C) 0 - 20 Gew.% eines schlagzäh modifizierenden Kautschuks,
D) 0 - 45 Gew.-% eines faser- oder teilchenförmigen Füllstoffs oder deren Mischungen,
E) 0 - 20 Gew.% eines Flammschutzmittels,
F) 0 - 30 Gew.% üblicher Zusatzstoffe,

wobei sich die Prozentzahlen A) - F) zu 100 % ergänzen, und deren Verwendung.

EP 0 510 383 A2

Die Erfindung betrifft neue hochschlagzähe Formmassen, enthaltend als wesentliche Komponenten

A) 5 - 95 Gew.% eines teilaromatischen teilkristallinen Copolyamids, aufgebaut im wesentlichen aus

$A_1$) 3 - 18 Gew.% Einheiten, die sich von Terephthalsäure und Hexamethylendiamin ableiten,

$A_2$) 0 - 97 Gew.% Einheiten, die sich von $\epsilon$-Caprolactam ableiten und

$A_3$) 0 - 97 Gew.% Einheiten, die sich von Adipinsäure und Hexamethylendiamin ableiten,

oder aus

$A_1$) 18,1 - 48 Gew.% Einheiten, die sich von Terephthalsäure und Hexamethylendiamin ableiten,

$A_2$) 52 - 81,9 Gew.% Einheiten, die sich von $\epsilon$-Caprolactam ableiten und

$A_3$) 0 - 29,9 Gew.% Einheiten, die sich von Adipinsäure und Hexamethylendiamin ableiten,

B) 3 - 85 Gew.% eines modifizierten Polyphenylenethers, der bis zu 40 Gew.%, bezogen auf B), durch ein vinylaromatisches Polymeres ersetzt sein kann,

C) 0 - 20 Gew.% eines schlagzäh modifizierenden Kautschuks

sowie darüber hinaus

D) 0 - 45 Gew.-% eines faser- oder teilchenförmigen Füllstoffs oder deren Mischungen,

E) 0 - 20 Gew.% eines Flammschutzmittels,

F) 0 - 30 Gew.% üblicher Zusatzstoffe,

wobei sich die Prozentzahlen A) - F) zu 100 % ergänzen.

Außerdem betrifft die Erfindung die Verwendung dieser Formmassen zur Herstellung von Formkörpern und die daraus hergestellten Formkörper.

Formmassen aus einem modifizierten Polyphenylenether (PPE) und Polyamid sind bekannt. In der EP 232 363 werden Mischungen aus einem durch Umsetzen mit Maleinsäureanhydrid in der Schmelze modifizierten PPE, aliphatischen Polyamiden und einem Schlagzähmodifier beschrieben. Diese Produkte zeichnen sich zwar durch gute Schlagzähigkeit aus, jedoch wäre eine Verbesserung der Wärmeformbeständigkeit und eine Verringerung der Schwindung wünschenswert.

Aus der EP 320 725 ist bekannt, daß Mischungen aus einem modifizierten PPE, einem teilaromatischen Polyamid bestimmter Zusammensetzung und einem Elastomeren zu Produkten mit hoher Wärmeformbeständigkeit und geringer Schwindung führen. In der EP 270 796 werden Mischungen aus PPE und einem amorphen Polyamid beschrieben.

In der EP 320 234 werden Mischungen aus einem teilaromatischen und einem aliphatischen Polyamid, einem aliphatischen Polyester und einem Elastomeren beschrieben. Diese Mischungen können weiterhin unmodifizierten PPE enthalten. Jedoch wäre eine höhere Zähigkeit bei diesen Produkten wünschenswert.

In einigen Anwendungsbereichen, wie z.B. bei Kraftfahrzeugformteilen wird eine hohe Zähigkeit bei guter Verarbeitbarkeit gefordert. Die Zähigkeit der nach der Lehre der genannten Schriften erhaltenen Produkte ist dort nicht ausreichend.

Aufgabe der vorliegenden Erfindung war es daher, thermoplastische Formmassen auf der Basis von modifiziertem PPE, Polyamid und Schlagzähmodifier zur Verfügung zu stellen, die sich durch hohe Zähigkeit auszeichnen.

Diese Aufgabe wird erfindungsgemäß durch die eingangs definierten thermoplastischen Formmassen gelöst. Bevorzugte Massen dieser Art sind den Unteransprüchen zu entnehmen.

Als Komponente A) enthalten die erfindungsgemäßen thermoplastischen Formmassen 5 - 95, insbesondere 15 - 75 und besonders bevorzugt 25 - 65 Gew.% eines teilaromatischen teilkristallinen Copolyamids, welches im wesentlichen aufgebaut ist aus entweder

$A_1$) 3 - 18, vorzugsweise 4 - 16 Gew.% Einheiten, die sich von Terephthalsäure und Hexamethylendiamin ableiten,

$A_2$) 0 - 97, vorzugsweise 3 - 85 Gew.% Einheiten, die sich von $\epsilon$-Caprolactam ableiten und

$A_3$) 0 - 97, vorzugsweise 11 - 93 Gew.% Einheiten, die sich von Adipinsäure und Hexamethylendiamin ableiten,

oder

$A_1$) 18,1 - 48 Gew.-%, vorzugsweise 23 - 40 Gew.% Einheiten, die sich von Terephthalsäure und Hexamethylendiamin ableiten,

$A_2$) 52 - 81,9 Gew.-%, vorzugsweise 52 - 75 Gew.% Einheiten, die sich von $\epsilon$-Caprolactam ableiten und

$A_3$) 0 - 29,9 Gew.-%, vorzugsweise 2 - 25 Gew.% Einheiten, die sich von Adipinsäure und Hexamethylendiamin ableiten.

Derartige Copolyamide sind im Prinzip bekannt und in der Literatur, z.B. der DE-C 929 151, der GB-PS 1 114 541, der DE-A 16 69 45, der DE-A 16 20 997 und der DE-A 34 07 492 beschrieben.

Im folgenden werden solche Copolyamide näher beschrieben.

Als Komponente $A_1$) enthalten diese teilaromatischen Copolyamide 3 - 18, vorzugsweise 4 - 16 Gew.% Einheiten, die sich von Terephthalsäure und Hexamethylendiamin ableiten. Ein geringer Anteil der Terephthalsäure, vorzugsweise nicht mehr als 10 Gew.% der gesamten eingesetzten aromatischen Dicarbonsäuren kann durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten, die sich von $\epsilon$-Caprolactam ableiten und/oder Einheiten, die sich von Adipinsäure und Hexamethylendiamin ableiten.

Der Anteil an Einheiten die sich von $\epsilon$-Caprolactam ableiten, beträgt maximal 97 Gew.%, vorzugsweise 3 - 85 Gew.%, während der Anteil an Einheiten die sich von Adipinsäure und Hexamethylendiamin ableiten, bis zu 97 Gew.%, vorzugsweise 11 - 93 Gew.% beträgt.

Die Copolyamide können aber auch als Komponente $A_1$) zwischen 18,1 und 48 Gew.-%, vorzugsweise 23 - 40 Gew.% Einheiten, die sich von Terephthalsäure und Hexamethylendiamin ableiten, enthalten. In diesem Fall enthalten die erfindungsgemäßen Copolyamide 52 - 81,9 Gew.%, vorzugsweise 52 - 75 Gew.% Einheiten, die sich von $\epsilon$-Caprolactam ableiten, während die Einheiten, die sich von Adipinsäure und Hexamethylendiamin ableiten, bis zu 29,9 Gew.%, vorzugsweise 2 - 25 Gew.% betragen.

Neben den vorstehend beschriebenen Einheiten $A_1$) bis $A_3$) können die teilaromatischen Copolyamide A) noch untergeordnete Mengen, vorzugsweise nicht mehr als 15 Gew.%, insbesondere nicht mehr als 10 Gew.% an weiteren Polyamidbausteinen enthalten, wie sie von anderen Polyamiden bekannt sind. Diese Bausteine können sich von Dicarbonsäuren mit 4 - 16 Kohlenstoffatomen und aliphatischen oder cycloalphatischen Diamine mit 4 - 16 Kohlenstoffatomen sowie von Aminocarbonsäuren bzw. entsprechenden Lactamen mit 7 - 12 Kohlenstoffatomen ableiten. Als geeignete Monomere dieser Typen seien hier nur Suberinsäure, Azelainsäure, Sebacinsäure oder Isophthalsäure als Vertreter der Dicarbonsäuren, 1,4-Butandiamin, 1,5-Pentandiamin, Piperazin, 4,4'-Diaminodicyclohexylmethan, 2,2-(4,4'-Diaminodicyclohexyl)-propan oder 3,3'-Dimethyl-4,4'-Diaminodicyclohexylmethan als Vertreter der Diamine und Capryllactam, Önanthlactam, Omega-Aminoundecansäure und Laurinlactam als Vertreter von Lactamen bzw. Aminocarbonsäuren genannt.

Die Herstellung der vorstehend beschriebenen Copolyamide kann nach dem in den EP-A 129 195 und 129 196 beschriebenen Verfahren erfolgen.

Gemäß diesem Verfahren wird eine wäßrige Lösung der Monomeren, d.h. in diesem Fall der Monomeren, die die Einheiten $A_1$) bis $A_3$) bilden, unter erhöhtem Druck unter gleichzeitiger Verdampfung von Wasser und Bildung eines Präpolymeren auf eine Temperatur von 250 - 300 °C erhitzt, anschließend werden Präpolymere und Dämpfe kontinuierlich getrennt, die Dämpfe rektifiziert und die mitgeführten Diamine zurückgeleitet. Schließlich wird das Präpolymer in eine Polykondensationszone geleitet und unter einem Überdruck von 1 - 10 bar und einer Temperatur von 250 - 300 °C polykondensiert. Wesentlich ist bei dem Verfahren, daß die wäßrige Salzlösung unter einem Überdruck von 1 - 10 bar innerhalb einer Verweilzeit von weniger als 60 Sekunden erhitzt wird, wobei bei Austritt aus der Verdampferzone der Umsetzungsgrad vorteilhaft mindestens 93 % und der Wassergehalt des Präpolymeren höchstens 7 Gew.% beträgt.

Durch diese kurzen Verweilzeiten wird die Bildung von Triaminen weitgehend verhindert.

Die verwendeten wäßrigen Lösungen haben in der Regel einen Monomergehalt von 30 - 70 Gew.%, insbesondere von 40 - 65 Gew.%.

Die wäßrige Salzlösung wird vorteilhaft mit einer Temperatur von 50 - 100 °C kontinuierlich in eine Verdampferzone geleitet, in der die wäßrige Salzlösung unter einem Überdruck von 1 - 10, vorzugsweise von 2 - 6 bar auf eine Temperatur von 250 - 330 °C erhitzt wird. Es versteht sich, daß die angewandte Temperatur über dem Schmelzpunkt des jeweils herzustellenden Polyamids liegt.

Wie bereits erwähnt, ist es bei diesem bevorzugten Verfahren wesentlich, daß die Verweilzeit in der Verdampferzone maximal 60 Sekunden, vorzugsweise 10 - 55 Sekunden und insbesondere 10 - 40 Sekunden beträgt.

Der Umsatz beim Austritt aus der Verdampferzone beträgt mindestens 93, vorzugsweise 95 - 98 % und der Wassergehalt liegt vorzugsweise im Bereich von 2 - 5, insbesondere 1 - 3 Gew.%.

Die Verdampferzone ist vorteilhaft als Röhrenbündel ausgebildet. Besonders bewährt haben sich Röhrenbündel, in denen der Querschnitt der einzelnen Röhren periodisch wiederkehrend rohrförmig und spaltförmig ausgebildet ist.

Ferner hat es sich als vorteilhaft erwiesen, das Gemisch aus Präpolymeren und Dampf vor der Trennung der Phasen unmittelbar nach der Verdampferzone durch eine röhrenförmige Stoffaustauschzone, die mit Einbauten versehen ist, zu leiten. Hierbei hält man die in der Verdampferzone angewandten Temperaturen und Druckbedingungen ein. Die Einbauten, z.B. Füllkörper wie Raschigringe, Metallringe oder insbesondere Füllkörper aus Drahtnetz, bewirken eine große Oberfläche. Hierdurch werden die Phasen, d.h. Präpolymeres und Dampf, innig in Berührung gebracht. Dies bewirkt, daß die Menge des mit Wasserdampf

freigesetzten Diamins erheblich vermindert wird. In der Regel hält man in der Stoffaustauschzone eine Verweilzeit von 1 bis 15 Minuten ein. Die Stoffaustauschzone ist vorteilhaft als Röhrenbündel ausgebildet.

Das aus der Verdampferzone bzw. Stoffaustauschzone austretende zweiphasige Gemisch aus Dampf und Präpolymeren wird getrennt. Die Trennung erfolgt in der Regel von selbst aufgrund der physikalischen Unterschiede in einem Gefäß, wobei der untere Teil des Gefäßes vorteilhaft als Polymerisationszone ausgebildet ist. Die freiwerdenden Brüden bestehen im wesentlichen aus Wasserdampf und Diaminen, die beim Verdampfen des Wassers freigesetzt wurden. Diese Brüden werden in eine Kolonne geleitet und rektifiziert. Geeignete Kolonnen sind beispielsweise Füllkörperkolonnen, Glockenbodenkolonnen oder Siebbodenkolonnen mit 5 bis 15 theoretischen Böden. Die Kolonne wird zweckmäßig unter identischen Druckbedingungen wie die Verdampferzone betrieben. Die in den Brüden enthaltenen Diamine werden hierbei abgetrennt und wieder der Verdampferzone zugeführt. Es ist auch möglich, die Diamine der nachfolgenden Polymerisationszone zuzuführen. Der anfallende rektifizierte Wasserdampf wird am Kopf der Kolonne entnommen.

Das erhaltene Präpolymere, das entsprechend seinem Umsetzungsgrad im wesentlichen aus niedermolekularem Polyamid und gegebenenfalls restlichen Mengen an nicht umgesetzten Salzen besteht und in der Regel eine relative Viskosität von 1,2 - 1,7 hat, wird in eine Polymerisationszone geleitet. In der Polymerisationszone wird die anfallende Schmelze bei einer Temperatur von 250 - 330 ° C, insbesondere 270 - 310 ° C, und unter einem überdruck von 1 - 10 bar, insbesondere 2 - 6 bar, polykondensiert. Vorteilhaft werden die hierbei freiwerdenden Dämpfe zusammen mit den obengenannten Brüden in der Kolonne rektifiziert, vorzugsweise hält man in der Polykondensationszone eine Verweilzeit von 5 - 30 Minuten ein. Das so erhaltene Polyamid, das in der Regel eine relative Viskosität von 1,2 - 2,3 hat, wird kontinuierlich aus der Kondensationszone entnommen.

Nach einer bevorzugten Arbeitsweise leitet man das so erhaltene Polyamid schmelzflüssig durch eine Austragszone unter gleichzeitiger Entfernung des in der Schmelze enthaltenen Restwassers. Geeignete Austragszonen sind beispielsweise Entgasungsextruder. Die so vom Wasser befreite Schmelze wird dann in Stränge gegossen und granuliert. Das erhaltene Granulat wird vorteilhaft in fester Phase mittels überhitztem Wasserdampf bei einer Temperatur unterhalb des Schmelzpunktes, z.B. von 170 - 240 ° C, bis zur gewünschten Viskosität kondensiert. Vorteilhaft verwendet man hierfür den am Kopf der Kolonne anfallenden Wasserdampf.

Der K-Wert, gemessen in 1 %iger Lösung in 96 Gew.% $H_2SO_4$ bei 23 ° C, liegt nach der Festphasennachkondensation im allgemeinen im Bereich von 60 - 95, vorzugsweise von 65 - 90.

Nach einer anderen bevorzugten Arbeitsweise wird die aus der Polykondensationszone ausgetragene Polyamidschmelze in eine weitere Polykondensationszone geleitet und dort unter fortlaufender Ausbildung neuer Oberflächen bei einer Temperatur von 285 bis 310 ° C vorteilhaft unter vermindertem Druck, z.B. von 1 - 500 mbar, bis zur gewünschten Viskosität kondensiert. Geeignete Vorrichtungen sind als Finisher bekannt.

Ein weiteres Verfahren, welches dem oben beschriebenen ähnelt, ist in der EP-A 129 196 beschrieben. Wegen Einzelheiten sei hier auf die Schrift selbst verwiesen.

Die Copolyamide A) können anstatt kontinuierlich auch diskontinuierlich hergestellt werden; entsprechende Verfahren sind dem Fachmann bekannt.

Als Komponente B) enthalten die erfindungsgemäßen Formmassen 3 bis 85, vorzugsweise 22 bis 82, insbesondere 30 bis 60 Gew.% eines modifizierten Polyphenylenethers.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität $\pi_{red}$ von 0,2 bis 0,9 dl/g, vorzugsweise von 0,35 bis 0,8 und insbesondere 0,45 bis 0,6, gemessen in einer 1 gew.%igen Lösung in Chloroform bei 25 ° C nach DIN 53 726.

Die unmodifizierten Polyphenylenether $b_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren

verträglich, d.h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether),Poly(2,6-diphenyl-1,4-phenylenether), Poly(2,6-dimethoxi-1,4-phenylenether), Poly(2,6-diethoxi-1,4-polyphenylenether), Poly(2-methoxi-6-ethoxi-1,4-phenylenether), Poly(2-ethyl-6-stearyloxi-1,4-phenylenether), Poly(2,6-dichlor-1,4-phenylenether), Poly(2-methyl-6-phenyl-1,4-phenylenether, Poly(2,6-dibenzyl-1,4-phenylen)ether, Poly(2-ethoxi-1,4-phenylenether), Poly(2-chlor-1,4-phenylenether), Poly(2,5-dibrom-1,4-phenylenether).Bevorzugt werden Polyphenylenether eingesetzt, bei denen die Substituenten Alkylreste mit 1 bis 4 Kohlenstoffatomen sind, wie Poly-(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether) und Poly(2-ethyl-6-propyl-1,4-phenylenether).

Weiterhin sind Pfropfcopolymere aus Polyphenylenether und vinylaromatischen Monomeren wie Styrol, $\alpha$-Methylstyrol, Vinyltoluol und Chlorstyrol geeignet.

Funktionalisierte oder modifizierte Polyphenylenether B) sind an sich bekannt, z.B. aus WO-A 86/02086, WO-A 87/00540, EP-A-222 246, EP-A-223 116 und EP-A-254 048.

Üblicherweise wird der Polyphenylenether $b_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine hinreichende Verträglichkeit mit dem 2. Polymeren der Mischung, dem Polyamid, gewährleistet ist.

Die Modifizierung wird im allgemeinen durch Umsetzung eines Polyphenylenethers $b_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Geeignete Modifiziermittel ($b_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von $C_1$- und $C_2$-$C_8$-Alkanolen (Monomere $b_{31}$), die Mono- oder Diamide dieser Säuren wie N-Phenylmaleinimid (Monomere $b_{32}$), Maleinhydrazid. Weitere Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere $b_{33}$) seien beispielsweise N-Vinylpyrrolidon und (Meth)acryloylcaprolactam genannt.

Bevorzugt wird in den erfindungsgemäßen Formmassen als Komponente B) ein modifizierter Polyphenylenether eingesetzt, der durch Umsetzen von

$b_1$) 70 bis 99,95 Gew.-% eines unmodifizierten Polyphenylenethers,
$b_2$) 0 bis 40 Gew.-% eines vinylaromatischen Polymeren,
$b_3$) 0,05 bis 30 Gew.-% mindestens einer Verbindung aus der Gruppe gebildet aus
  $b_{31}$) einer $\alpha,\beta$-ungesättigten Dicarbonylverbindung,
  $b_{32}$) eines Amid-Gruppen enthaltenden Monomeren mit einer polymerisierbaren Doppelbindung und
  $b_{33}$) eines Lactam-Gruppen enthaltenden Monomeren mit einer polymerisierbaren Doppelbindung,
$b_4$) 0 bis 5 Gew.-% eines Radikalstarters

wobei sich die Gewichtsprozente auf die Summe von $b_1$) bis $b_4$) beziehen, im Verlaufe von 0,5 bis 15 Minuten bei 240 bis 375 °C in geeigneten Misch- und Knetaggregaten wie Zweischneckenextrudern erhältlich ist.

Das vinylaromatische Polymer ($b_2$) soll vorzugsweise mit dem eingesetzten Polyphenylenether verträglich sein.

Das Molekulargewicht dieser an sich bekannten Polymeren liegt im allgemeinen im Bereich von 1500 bis 2 000 000, vorzugsweise im Bereich von 70 000 bis 1 000 000, besonders bevorzugt im Bereich von 75 000 bis 200 000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, $\alpha$-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Als Radikalstarter ($b_4$) seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl)benzol und Di-tert.-butylperoxid. Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane der allgemeinen Struktur

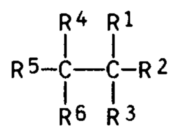

wobei $R^1$ bis $R^6$ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem $\pi$-Elektronensystem und Stickstoff, Sauerstoff oder Schwefel als Heteroatomen darstellen. Die Substituenten $R^1$ bis $R^6$ können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Neben den wesentlichen Komponenten A) und B) können die erfindungsgemäßen Formmassen 0 - 20, bevorzugt 3 - 17 Gew.-%, und insbesondere 5 - 15 Gew.% eines schlagzähmodifizierenden Kautschuks enthalten. Es können übliche Schlagzähmodifier C) verwendet werden, die für Polyamide (Komponente A) geeignet sind und Kautschuke C), die üblicherweise Polyphenylenether B) schlagzähmodifizieren.

Als Komponente C) werden die üblichen zur Verbesserung der Zähigkeit von Polyamiden oder Polyphenylenethern eingesetzten schlagzäh modifizierenden Polymeren (auch Schlagzähmodifier, Elastomere oder Kautschuke genannt) verwendet.

Als Kautschuke, die die Zähigkeit von Polyphenylenethern erhöhen, seien z.B. folgende genannt: Polyoctenylene, Pfropfkautschuke mit einem vernetzten, elastomeren Kern, der beispielsweise von Butadien, Isopren oder Alkylacrylaten abgeleitet ist und einer Pfropfhülle aus Polystyrol, weiterhin Copolymere aus Ethylen und Acrylaten bzw. Methacrylaten sowie die sogenannten Ethylen-Propylen (EP)- und Ethylen-Propylen-Dien (EPDM)-Kautschuke, ferner die mit Styrol gepfropften EP- bzw. EPDM-Kautschuke.

Blockcopolymere mit bis zu sechs, vorzugsweise mit bis zu vier gleichen oder unterschiedlichen Blöcken, die sowohl linear als auch sternförmig (sogenannte Radialblockcopolymere) verbunden sein können, haben sich als besonders geeignet erwiesen.

Bevorzugt werden Blockkautschuke, bei denen mindestens ein Block, vorzugsweise ein Endblock, aus vinylaromatischen Monomeren wie Styrol, $\alpha$-Methylstyrol, Vinyltoluol, Vinyl- oder Isopropenylnaphthalin aufgebaut ist. Polystyrol als vinylaromatischer Block ist besonders bevorzugt.

Üblicherweise enthalten diese bevorzugten Blockcopolymere weiterhin einen elastomeren Block, der durch eine Glastemperatur von weniger als 0 °C, vorzugsweise von weniger als -30 °C charakterisiert ist. Dieser Block leitet sich z.B. von konjugierten Dienen wie Butadien, Isopren, 1,3-Pentadien oder 2,3-Dimethylbutadien ab. Um Produkte mit guter Dauerwärmeformbeständigkeit zu erhalten, hat es sich als besonders geeignet erwiesen, wenn mindestens 50 %, vorzugsweise mindestens 80 % und insbesondere mindestens 90 % der Doppelbindungen hydriert werden.

Die übergänge zwischen den einzelnen Blöcken können sowohl scharf als auch verschmiert sein.

Vorzugsweise handelt es sich bei den Kautschuken, die die Zähigkeit von Polyphenylenethern erhöhen, um lineare Blockcopolymere der allgemeinen Struktur A-B, A-B-A' oder A-B-A'-B', wobei A und A' den vinylaromatischen Block, vorzugsweise Polystyrol, darstellen und B und B' den elastomeren Block, der vorzugsweise aus Butadien und/oder Isopren - wobei sowohl Butadien als auch Isopren hydriert sein können - aufgebaut ist.

Mischungen aus Blockcopolymeren verschiedener Strukturen, z.B. Mischungen aus Zwei- und Dreiblockcopolymeren oder aus hydrierten und unhydrierten Blockcopolymeren, können ebenfalls eingesetzt werden.

Derart schlagzäh modifizierende Polymere sind an sich bekannt und in der Literatur beschrieben. Nur beispielsweise sei hier auf US-A 4 085 163, US-A 4 041 103, US-A 3 149 182, US-A 3 231 635 und US-A 3 462 162 verwiesen.

Auch im Handel sind entsprechende Produkte erhältlich, z.B. ein Polyoctylen der Bezeichnung

Vestenamer® (Hüls AG), sowie eine Vielzahl geeigneter Blockcopolymere mit mindestens einem vinylaromatischen und einem elastomeren Block. Beispielhaft seien die Cariflex®-TR-Typen (Shell), die Kraton®- G-Typen (Shell), die Finaprene®-Typen (Fina) und die Europrene®-SOL-TR-Typen (Enichem) genannt.

Kautschuke, die die Zähigkeit von Polyamiden erhöhen, weisen i.a. zwei wesentliche Merkmale auf: sie enthalten einen elastomeren Anteil, der eine Glastemperatur von weniger als -10 °C, vorzugsweise von weniger als -30 °C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien z.B. folgende genannt:
EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von $\alpha$-Olefinen genannt. Bei den $\alpha$-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-$\alpha$-Olefin hergestellt werden. Der Anteil des $\alpha$-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25 °C, unter einem weichen Bestandteil ein Polymerisat mit einer Glastemperatur von höchstens 0 °C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, $\alpha$-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern $a_3$) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als Komponente D) können die erfindungsgemäßen Formmassen 0 bis 45, vorzugsweise von 10 bis 40

Gew.% faser- oder teilchenförmige Füllstoffe oder deren Mischungen enthalten. Als Beispiele für Füllstoffe seien Kohlenstoff- oder Glasfasern in Form von Glasgeweben, Glasmatten oder Glasseidenrovings, Glaskugeln sowie Wollastonit genannt.

Bevorzugte faserförmige Verstärkungsstoffe (Komponente D) sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) oder dem modifizierten Polyphenylenether (B) mit einer Schlichte und einem Haftvermittler ausgerüstet sein. Im allgemeinen haben die verwendeten Kohlenstoff- und Glasfasern einen Durchmesser im Bereich von 6 bis 20 $\mu$m.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe (Komponente D) eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Die erfindungsgemäßen Formmassen können weiterhin Flammschutzmittel E) in Mengen von 0 bis 20 Gew.-%, bevorzugt bis 12 Gew.-%, bezogen auf das Gesamtgewicht der Formmassen, enthalten.

Es kommen alle bekannten Flammschutzmittel in Betracht, wie z.B. Polyhalogendiphenyl, Polyhalogendiphenylether, Polyhalogenphthalsäure und ihre Derivate, Polyhalogenoligo- und -polycarbonate, wobei die entsprechenden Bromverbindungen besonders wirksam sind.

Beispiele hierfür sind Polymere des 2,6,2',6'-Tetrabrombisphenols A der Tetrabromphthalsäure, des 2,6-Dibromphenols und 2,4,6-Tribromphenols und deren Derivate.

Bevorzugtes Flammschutzmittel E) ist elementarer roter Phosphor. In der Regel kann der elementare Phosphor mit z.B. Polyurethanen oder anderen Aminoplasten phlegmatisiert oder gecoatet werden. Außerdem sind Konzentrate von rotem Phosphor z.B. in einem Polyamid, Elastomeren oder Polyolefin geeignet.

Besonders bevorzugt ist 1,2,3,4,7,8,9,10,13,13,14,14-Dodecachloro-1,4,4a,5,6,6a,7,10,10a,11,12,12a-dodecahydro-1,4:7,10-dimethanodibenzo(a,e)-cyclooctan (Dechlorane® Plus, Occidental Chemical Corp.) und gegebenenfalls einem Synergisten z.B. Antimontrioxid.

Weitere Phosphorverbindungen sind Organophosphorverbindungen wie Phosphonate, Phosphinate, Phosphinite, Phosphinoxide, Phosphine, Phosphite oder Phosphate sind ebenfalls bevorzugt. Als Beispiel sei Triphenylphosphinoxid genannt. Dieses kann allein oder vermischt mit rotem Phosphor und, wahlweise, Antimonoxid verwendet werden.

Typische bevorzugte Phosphorverbindungen sind solche der folgenden allgemeinen Formel

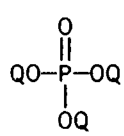

worin Q für Wasserstoff oder für gleiche oder verschiedene Kohlenwasserstoffreste oder Halogenkohlenwasserstoffreste, wie Alkyl, Cycloalkyl, Aryl, alkylsubstituiertes Aryl und arylsubstituiertes Alkyl steht, vorausgesetzt, daß mindestens einer der für Q stehenden Reste ein Arylrest ist. Beispiele solcher geeigneter Phosphate sind z.B. die folgenden: Phenylbisdodecylphosphat, Phenylbisneopentylphosphat, Phenylethylenhydrogenphosphat, Phenyl-bis-(3-5,5'-trimethylhexylphosphat), Ethyldiphenylphosphat, 2-Ethylhexyldi(p-toluyl)phosphat, Diphenylhydrogenphosphat, Bis-(2-ethylhexyl)phenylphosphat, Tri(nonylphenyl)phosphat, Phenylmethylhydrogenphosphat, Di(dodecyl)-p-tolylphosphat, Tricresylphosphat, Triphenylphosphat, Dibutylphenylphosphat und Diphenylhydrogenphosphat. Die bevorzugten Phosphate sind solche, bei denen jedes Q Aryl ist. Das am meisten bevorzugte Phosphat ist Triphenylphosphat. Weiter ist die Kombination von Triphenylphosphat mit rotem Phosphor bevorzugt.

Als Flammschutzmittel sind auch solche Verbindungen geeignet, die Phosphor-Stickstoff-Bindungen enthalten, wie Phosphonitrilchlorid, Phosphorsäureesteramide, Phosphorsäureesteramine, Phosphorsäureamide, Phosphonsäureamide, Phosphinsäureamide, Tris(Aziridinyl)-phosphinoxid oder Tetrakis-(hydroxymethyl)phosphoniumchlorid. Diese entflammungshemmenden Additive sind größtenteils im Handel erhältlich.

Weitere halogenhaltige Flammschutzmittel sind Tetrabrombenzol, Hexachlorbenzol und Hexabrombenzol sowie halogenierte Polystyrole und Polyphenylenether.

Auch die in der DE-A-19 46 924 beschriebenen halogenierten Phthalimide können verwendet werden. Von diesen hat insbesondere N,N'-Ethylenbistetrabromphthalimid Bedeutung erlangt.

Neben den wesentlichen Komponenten A) und B) sowie gegebenenfalls C bis E können die erfindungsgemäßen Formmassen übliche Zusatzstoffe und Verarbeitungshilfsmittel F) enthalten. Deren Anteil beträgt im allgemeinen bis zu 20, vorzugsweise bis zu 10 Gew.-%, bezogen auf das Gesamtgewicht der Komponenten A bis E.

Übliche Zusatzstoffe sind beispielsweise Stabilisatoren und Oxidationsinhibitoren, Mittel gegen Wärmezersetzung und Zersetzung durch ultraviolettes Licht, Gleit- und Entformungsmittel, Farbstoffe, Pigmente und Weichmacher.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Materialien zur Erhöhung der Abschirmung gegen elektromagnetische Wellen, wie Metallflocken, -pulver, -fasern, metallbeschichtete Füllstoffe und leitfähige Polymere können mitverwendet werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Silbers, Eisens, Kupfers, Antimons, Zinns, Magnesiums, Mangans, Vanadiums, Bors, Aluminiums und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate und Sulfate.

Die erfindungsgemäßen thermoplastischen Formmassen erhält man zweckmäßig durch Mischen der Einzelkomponenten bei Temperaturen von 270 bis 350 °C in üblichen Mischvorrichtungen, wie Knetern, Banbury-Mischern und Einschneckenextruder, vorzugsweise jedoch mit einem Zweischneckenextruder. Um eine möglichst homogene Formmasse zu erhalten, ist eine intensive Durchmischung notwendig. Die Abmischreihenfolge der Komponenten kann variiert werden, so können zwei oder gegebenenfalls drei Komponenten vorgemischt werden, es können aber auch alle Komponenten gemeinsam gemischt werden.

Es sei erwähnt, daß bei der Herstellung der Formmassen eine Reaktion zwischen den Komponenten A) bis D), insbesondere zwischen A) und B), auftreten kann, so daß im Endprodukt keine reine Mischung dieser Komponenten mehr vorliegt.

Die erfindungsgemäßen Formmassen zeichnen sich durch ihre ausgewogenen Eigenschaften, insbesondere aber durch ihre gute Zähigkeit.

Sie eignen sich besonders zur Herstellung von Formkörpern durch Spritzguß oder Extrusion, insbesondere für thermisch beanspruchte Teile im Automobilbereich. Im letzteren Anwendungsgebiet ist besonders von Vorteil, daß sich die aus den erfindungsgemäßen Formmassen hergestellten Teile aufgrund ihrer guten Wärmeformbeständigkeit online lackieren lassen, d.h. keine zeit- und kostenintensive getrennte Lackierung erforderlich ist.

Beispiele

Zur Herstellung von erfindungsgemäßen Formmassen und Vergleichsprodukten wurden folgende Komponenten eingesetzt:

Komponente A (Polyamid)

In einem Autoklaven wurden in diskontinuierlicher Fahrweise Polyamide folgender Zusammensetzung hergestellt:

| Poly-amid | Terephthalsäure/ Hexamethylendiamin | Capro-lactam | Adipinsäure/Hexa-methylendiamin | K-Wert | Tm °C |
|---|---|---|---|---|---|
| A 1 | 32 | 53 | 15 | 75,6 | 167 |
| A 2 | 15 | 65 | 20 | 77,3 | 161 |
| A 3 | 5 | 10 | 85 | 70,9 | 233 |
| A 4* | 70 | 30 | - | 70,2 | 305 |
| A 5* | 45 | - | 55 | 72,1 | |

Weiterhin wurden Polyamid 66 bzw. 6 eingesetzt:

| | | | | | |
|---|---|---|---|---|---|
| A 6* | - | - | 100 | 72,3 | 260 |
| A 7* | - | 100 | - | 75,2 | 220 |

*Vergleichsbeispiel

Die Schmelzwärme der Komponenten A1 bis A4 (bestimmt durch DSC beim 2. Aufheizen mit einer Heizgeschwindigkeit von 10° C/min) lag über 5 J/g.

Komponente B (modifizierter Polyphenylenether)

In einem Zweischneckenextruder wurden bei einer Zylindertemperatur von 300° C folgende Komponenten innig durchmischt:
95 % Poly(2,6-dimethyl-1,4-phenylen)ether ($\pi_{red}$ = 0,58 dl/g; Chloroform, 1 Gew.%, 25° C)
4 % Polystyrol (MVI (200° C/5 kg) = 25 g/10 min)
1 % Fumarsäure
Die Schmelze wurde durch ein Wasserbad geleitet und granuliert. Die mittlere Verweilzeit lag bei 180 s.

Komponente C (Schlagzähmodifier)

- C 1: Cariflex® TR 1101 (Styrol-Butadien-Styrol-Blockcopolymer, 30 % Polystyrol, MFR (200° C/5 kg: < 1 g/10 min), Fa. Shell
- C 2: Kraton® G 1650 (Styrol-hydriertes Butadien-Styrol-Blockcopolymer, 29 % Polystyrol, Brookfield Viskosität (77° F, 25 gew.%ig in Toluol) = 8000 cps), Fa. Shell
- C 3: Kraton® G 1701X (Styrol-hydriertes Isopren-Blockcopolymer, 28 % Polystyrol, Brookfield Viskosität (77° F, 25 gew.%ig in Toluol) = > 50.000 cps), Fa. Shell
- C 4: Exxelor® VA 1803: Maleinsäureanhydridmodifizierter EP-Kautschuk (MFR (230° C/2,16 kg) = 3 g/10 min; Dichte: 0,86 g/cm$^3$), Fa. Exxon

Die in den Tabellen angegebenen Anteile der jeweiligen Komponenten wurden in einem Zweiwellenextruder bei einer Zylindertemperatur von 280° C (bzw. 310° C bei den Beispielen 4, 5 und 12 und einer Drehzahl von 200 Upm vermischt. Die Schmelze wurde nach Abkühlen granuliert. Das getrocknete Granulat wurde dann zu Normkleinstäben verspritzt. Nach Einsägen der Kerbe wurde die Kerbschlagzähigkeit nach Charpy (DIN 53 453) bei Raumtemperatur bestimmt.

Tabelle 1:

Zusammensetzung: 46 Gew.% A), 43 Gew.% B), 11 Gew.% C2)

| Beispiel | Komponente A) | Kerbschlagzähigkeit [kJ/m²] |
|---|---|---|
| 1 | A 1 | 60 |
| 2 | A 2 | 72 |
| 3 | A 3 | 42 |
| 4[1] | A 4* | 16 |
| 5[1] | A 5* | 15 |
| 6[2] | A 6* | 24 |
| 7[2] | A 7* | 32 |

1) gemäß der Lehre der EP 320 725
2) gemäß der Lehre der EP 232 363

Der Vergleich der Beispiele 1 bis 3 mit den Beispielen 4 und 5 zeigt, daß nur teilaromatische Polyamide mit erfindungsgemäßer Zusammensetzung hochschlagzähe Produkte ergeben.

Tabelle 2:

Zusammensetzung: 47 Gew.-% A), 44 Gew.-% B), 9 Gew.-% C)

| Beispiel | Komponente A) | Komponente C) | Kerbschlagzähigkeit [kJ/m²] |
|---|---|---|---|
| 8 | A 1 | C 1 | 51 |
| 9 | A 2 | C 3 | 64 |
| 10 | A 3 | C 2 (6 Tl)+<br>C 4 (3 Tl) | 45 |

Tabelle 3:

Zusammensetzung: 43 Gew.-% A), 43 Gew.-% unmodifizierter PPE (aus Komponente B), 10 Gew.-% C1), 4 Gew.-% Poly-ε-caprolacton

| Beispiel | Komponente A) | Kerbschlagzähigkeit [kJ/m²] |
|---|---|---|
| 11 | A 2 | 0,3 |
| 12 | A 4* | 0,3 |
| 13 | A 7* | 0,5 |

Der Vergleich der Beispiele 11 und 12 zeigt, daß die Zusammensetzung des teilaromatischen Polyamids keinen Einfluß auf die Zähigkeit der gemäß der EP 320 234 hergestellten Mischungen hat.

## Patentansprüche

1. Hochschlagzähe Formmassen, enthaltend als wesentliche Komponenten
   A) 5 - 95 Gew.% eines teilaromatischen teilkristallinen Copolyamids, aufgebaut im wesentlichen entweder aus

$A_1$) 3 - 18 Gew.% Einheiten, die sich von Terephthalsäure und Hexamethylendiamin ableiten,
$A_2$) 0 - 97 Gew.% Einheiten, die sich von $\epsilon$-Caprolactam ableiten und
$A_3$) 0 - 97 Gew.% Einheiten, die sich von Adipinsäure und Hexamethylendiamin ableiten,
oder aus
$A_1$) 18,1 - 48 Gew.% Einheiten, die sich von Terephthalsäure und Hexamethylendiamin ableiten,
$A_2$) 52 - 81,9 Gew.% Einheiten, die sich von $\epsilon$-Caprolactam ableiten und
$A_3$) 0 - 29,9 Gew.% Einheiten, die sich von Adipinsäure und Hexamethylendiamin ableiten,
B) 3 - 85 Gew.% eines modifizierten Polyphenylenethers, der bis zu 40 Gew.%, bezogen auf B), durch ein vinylaromatisches Polymeres ersetzt sein kann,
C) 0 - 20 Gew.% eines schlagzäh modifizierenden Kautschuks
D) 0 - 45 Gew.-% eines faser- oder teilchenförmigen Füllstoffs oder deren Mischungen,
E) 0 - 20 Gew.% eines Flammschutzmittels,
F) 0 - 30 Gew.% üblicher Zusatzstoffe,
wobei sich die Prozentzahlen A) - F) zu 100 % ergänzen.

**2.** Hochschlagzähe Formmassen nach Anspruch 1, in denen
A) 15 - 75 Gew.%
B) 22 - 82 Gew.%
C) 3 - 17 Gew.%
D) 0 - 35 Gew.%
E) 0 - 12 Gew.%
F) 0 - 30 Gew.%
beträgt.

**3.** Hochschlagzähe Formmassen nach den Ansprüchen 1 und 2, dadurch gekennzeichnet, daß der Polyphenylenether B) hergestellt ist aus
$b_1$) 70 - 99,95 Gew.% eines Polyphenylenethers,
$b_2$) 0 - 40 Gew.% eines vinylaromatischen Polymeren,
$b_3$) 0,05 - 5 Gew.% mindestens einer Verbindung, die mindestens eine Doppel- oder Dreifachbindung und mindestens eine funktionelle Gruppe ausgewählt aus der Gruppe der Carbonsäuren, Carbonsäureester, Carbonsäureanhydride, Carbonsäureamide, Epoxide, Oxazoline oder Urethane enthält.

**4.** Hochschlagzähe Formmassen nach Anspruch 3, dadurch gekennzeichnet, daß die Komponente $b_3$) Maleinsäure, Maleinsäureanhydrid oder Fumarsäure ist.

**5.** Hochschlagzähe Formmassen nach den Ansprüchen 1 bis 4, dadurch gekennzeichnet, daß die Komponente A) einen K-Wert, bestimmt bei 23 °C in konzentrierter Schwefelsäure bei einer Konzentration von 1 g/dl von 60 bis 95 aufweist.

**6.** Verwendung der thermoplastischen Formmassen gemäß den Ansprüchen 1 bis 5 zur Herstellung von Formkörpern.

**7.** Formkörper, hergestellt aus Formmassen gemäß den Ansprüchen 1 bis 5 oder wie gemäß Anspruch 6 erhalten.